Europäisches Patentamt

European Patent Office

Office européen des brevets

(11) Veröffentlichungsnummer: **0 095 519**
**B1**

(12) **EUROPÄISCHE PATENTSCHRIFT**

(45) Veröffentlichungstag der Patentschrift:
31.07.85

(21) Anmeldenummer: **82104750.3**

(22) Anmeldetag: **29.05.82**

(51) Int. Cl.⁴: **D 01 G 15/88,** D 01 G 15/92,
B 23 D 71/00

(54) **Kardierstab.**

(43) Veröffentlichungstag der Anmeldung:
07.12.83 Patentblatt 83/49

(45) Bekanntmachung des Hinweises auf die Patenterteilung:
31.07.85 Patentblatt 85/31

(84) Benannte Vertragsstaaten:
CH DE FR GB LI

(56) Entgegenhaltungen:
BE - A - 419 320
DE - C - 35 082
DE - C - 632 396
FR - A - 986 075
FR - A - 1 151 661

(73) Patentinhaber: **Firma Peter Wolters, Büsumer Strasse,
D-2370 Rendsburg (DE)**

(72) Erfinder: **Bovensiepen, Hans Joachim Dipl.-Volkswirt,
Kanalufer 222, D-2370 Rendsburg (DE)**

(74) Vertreter: **Patentanwaltsbüro Cohausz & Florack,
Postfach 14 01 47, D-4000 Düsseldorf 1 (DE)**

BUNDESDRUCKEREI BERLIN

## Beschreibung

Es ist bekannt, bei Karden den auf dem Kardentambour sitzenden Deckel aus einer Vielzahl von Kardierstäben zu bilden, die einen Sägezahndrahtbeschlag haben. Hier und im folgenden ist der Ausdruck »Karde« im allgemeinsten Sinn zu verstehen, so daß darunter auch Krempel fallen. Der Sägezahnbelag solcher Stäbe besteht aus einer Vielzahl dicht nebeneinanderliegender Sägezahndrahtstücke, wobei beispielsweise deren Enden an dem Stab durch zwei Längsleisten gehalten sind, die hinterschnitten sind und beispielsweise Schwalbenschwanzform haben.

Die Herstellung solcher Kardierstäbe erfordert viel sorgfältige Arbeit, um die Sägezahndrahtstücke dicht nebeneinander auf dem Stab anzuordnen und zu befestigen.

Aufgabe der Erfindung ist, einen Kardierstab zu schaffen, dessen Herstellung weit weniger Arbeit erfordert und daher erheblich billiger herstellbar ist.

Gemäß der Erfindung wird diese Aufgabe dadurch gelöst, daß Sägezahndraht auf den Stab in einer Vielzahl nebeneinanderliegender Windungen gewickelt ist.

Der Stab hat vorzugsweise mehrere gleich große Seitenflächen, die somit gleich große Kardierflächen bilden, so daß der Stab bei Nachlassen der Kardierwirkung umgedreht werden kann, so daß seine zweite mit Sägezahnbeschlag versehene Seite benutzt wird. Der Beschlag kann aus einem einzigen Sägezahndraht bestehen, dessen Windungen dicht nebeneinanderliegen.

Der Beschlag kann aber auch aus zwei oder mehreren Sägezahndrähten bestehen, die in einer gemeinsamen Windung auf den Stab so aufgebracht sind, daß die Windungen dicht nebeneinanderliegen. Dabei können diese Sägezahndrähte die gleiche Form oder verschiedene Formen haben. Ferner können auf den Stab Windungen aufgebracht werden, die aus einem Sägezahndraht und einem Draht bestehen, der keine Zähne hat und die Sägezahndrähte auf Abstand hält. In diesen Fällen werden die Steigungswinkel der Windung und dadurch die in Kardierrichtung verlaufenden freien Gassen zwischen den Zähnen verändert. Die Sägezahndrähte eines Stabes können auch verschiedene Zahnteilungen haben.

Die Zeichnung zeigt Ausführungsbeispiele der Erfindung.

Fig. 1 zeigt in perspektivischer Ansicht einen Kardierstab gemäß der Erfindung.

Fig. 2, 3, 4 zeigen Seitenansichten anderer Kardierstäbe gemäß der Erfindung.

Fig. 5 und 6 zeigen Frontansichten von Kardierstäben gemäß der Erfindung, die verschiedene Querschnitte haben.

Fig. 7 zeigt schematisch einen Kardenbeschlag gemäß der Erfindung mit größerem Steigungswinkel der Windungen.

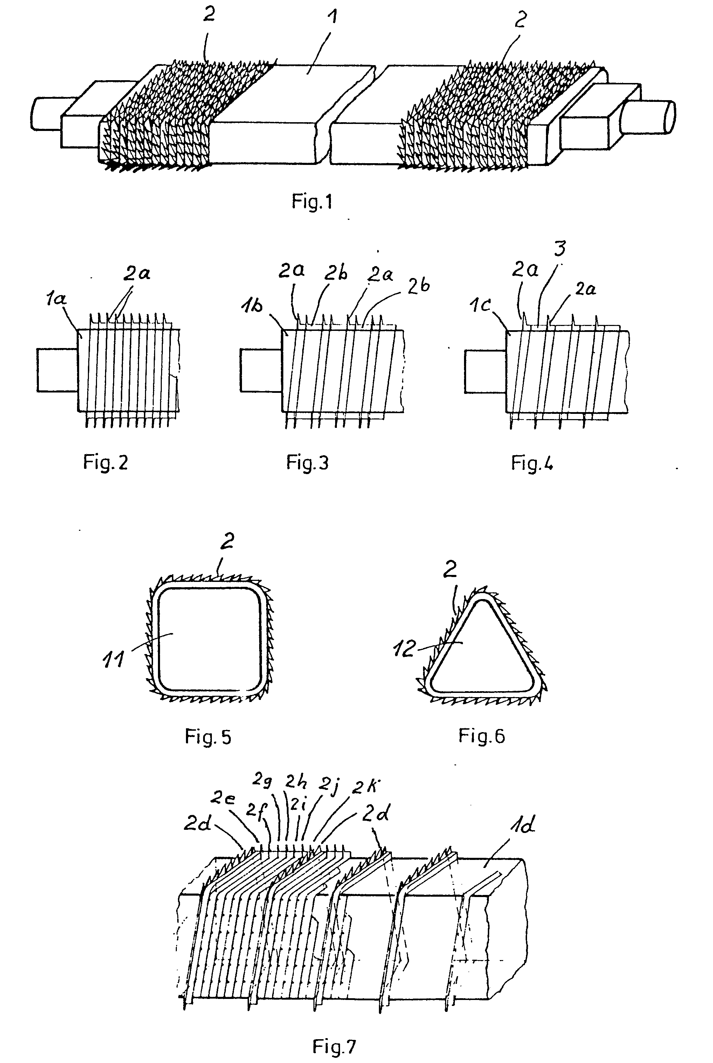

Der in Fig. 1 dargestellte Kardierstab 1 hat einen Querschnitt von etwa 4 cm × 2 cm. Auf den Stab 1 ist ein Sägezahndraht 2 mit dicht aneinanderliegenden Windungen aufgewickelt, so daß er auf den beiden Seiten 1a und 1b des Stabs 1 einen Sägezahnbeschlag bildet. Die Endwicklungen 2a und 2b des auf den Stab 1 aufgewickelten Sägezahndrahts 2 sind mit dem Stab 1 fest verbunden.

Die Fig. 2 zeigt einen Kardierstab 1a, auf den ein einziger Sägezahndraht 2a so aufgewickelt ist, daß seine Windungen fest aneinanderliegen. Die Fig. 3 zeigt einen Kardierstab 1b, auf den eine Gruppe von zwei Sägezahndrähten lückenlos aufgewickelt ist, von denen der eine Draht 2a einen schmaleren Fuß hat als der andere Draht 2b. Die Steigungen der Windungen sind daher in Fig. 3 erheblich größer als in Fig. 2. Die Drähte 2a und 2b können außerdem verschiedene Zahnteilungen haben. Auf den in Fig. 4 dargestellten Kardierstab 1a ist eine Gruppe von zwei Drähten lückenlos aufgewickelt, von denen der Draht 2a ein Sägezahndraht ist, während der andere Draht 3 ein Flachdraht ist.

Der in Fig. 5 dargestellte Kardierstab 11 hat einen quadratischen Querschnitt mit abgerundeten Ecken, so daß der auf ihn aufgewickelte Sägezahndraht 12 auf allen vier Seiten des Stabes einen gleichen breiten Sägezahnbeschlag bilden, der Stab also nach Abnutzung einer Seite weiterhin auf drei weiteren Seiten benutzt werden kann.

Der Querschnitt des in Fig. 6 dargestellten Kardierstabs 21 hat die Form eines gleichseitigen Dreiecks. Der auf ihn aufgewickelte Sägezahndraht 22 bildet daher auf allen drei Seiten des Stabes einen Sägezahnbeschlag.

Fig. 7 zeigt einen Teil eines Kardierstabs 31, auf den acht Sägezahndrähte 2d bis 2k als gemeinsame Windung aufgewickelt sind. Daher ist die Steigung der Windung des Sägezahndrahts erheblich größer als in den Fällen, die in den Fig. 1 bis 4 dargestellt sind. Durch Anordnung von Sägezahndrähten verschiedener Zahnteilung oder Dicke und durch Aufwickeln von Gruppen von Drähten kann die Größe der in Kardierrichtung verlaufenden Gassen verändert werden.

Kardierstäbe gemäß der Erfindung können z. B. als Stäbe des Deckels einer Deckelkarde benutzt werden; sie können aber auch an anderen Stellen der Karde benutzt werden, z. B. in der Vorkardierzone oder in der Nachkardierzone.

## Patentansprüche

1. Kardierstab mit Sägezahnbeschlag, dadurch gekennzeichnet, daß der Beschlag aus Sägezahndraht besteht, der in einer Vielzahl nebeneinanderliegender Windungen um den Stab gewickelt ist.

2. Kardierstab nach Anspruch 1, dadurch gekennzeichnet, daß er mehrere gleich große Seitenflächen hat.

3. Kardierstab nach Anspruch 2, dadurch gekennzeichnet, daß sein Querschnitt die Form eines gleichseitigen Vielecks mit abgerundeten Kanten hat.

4. Kardierstab nach Anspruch 1, dadurch gekennzeichnet, daß jede Windung aus einer Mehrzahl nebeneinanderliegender Sägezahndrähte besteht.

5. Kardierstab nach einem der Ansprüche 1 bis 4, dadurch gekennzeichnet, daß die Sägezahndrähte verschiedene Form aufweisen.

6. Kardierstab nach Anspruch 5, dadurch gekennzeichnet, daß die Sägezahndrähte verschiedene Zahnteilung haben.

7. Kardierstab nach Anspruch 5 oder 6, dadurch gekennzeichnet, daß die Sägezahndrähte verschiedene Breite haben.

8. Kardierstab nach einem der Ansprüche 1 bis 7, dadurch gekennzeichnet, daß die Steigung der Windungen größer ist als sie durch die Breite des Drahts bestimmt wird.

9. Kardierstab nach Anspruch 1, dadurch gekennzeichnet, daß jede Windung aus mindestens einem Sägezahndraht und einem nichtgezahnten Draht besteht.

## Claims

1. A carding member with a saw-tooth covering, characterised in that the covering consists of saw-tooth wire which is wound about the member with a plurality of adjacent windings.

2. A carding member as claimed in claim 1, characterised in that it has a plurality of side surfaces of the same size.

3. A carding member as claimed in claim 2, characterised in that its cross-section has the shape of an equilateral polygon with rounded corners.

4. A carding member as claimed in claim 1, characterised in that each winding consists of a plurality of adjacent saw-tooth wires.

5. A carding member as claimed in one of claims 1 to 4, characterised in that the saw-tooth wires have different shapes.

6. A carding member as claimed in claim 5, characterised in that the saw-tooth wires have different tooth pitches.

7. A carding member as claimed in claims 5 or 6, characterised in that the saw-tooth wires have different widths.

8. A carding member as claimed in one of claims 1 to 7, characterised in that the inclination of the turns is greater than determined by the width of the wire.

9. A carding member as claimed in claim 1, characterised in that each winding comprises at least one saw-tooth wire and one wire having no teeth.

## Revendications

1. Barrette de cardage avec garniture à dents de scie, caractérisée en ce que la garniture est constituée de fil métallique à dents de scie qui est enroulé autour de la barrette sous formes d'une pluralité de spires adjacentes les unes aux autres.

2. Barrette de cardage selon la revendication 1, caractérisée en ce qu'elle possède plusieurs faces latérales de même grandeur.

3. Barrette de cardage selon la revendication 2, caractérisée en ce que sa section transversale a la forme d'un polygone régulier à arêtes arrondies.

4. Barrette de cardage selon la revendication 1, caractérisée en ce que chaque enroulement est constitué d'une pluralité de fils métalliques à dents de scie adjacents les uns aux autres.

5. Barrette de cardage selon l'une des revendications 1 à 4, caractérisée en ce que les fils métalliques à dents de scie présentent des formes différentes.

6. Barrette de cardage selon la revendication 5, caractérisée en ce que les fils métalliques à dents de scie ont des pas de dents différents.

7. Barrette de cardage selon la revendication 5 ou 6, caractérisée en ce que les fils métalliques à dents de scie ont des largeurs différentes.

8. Barrette de cardage selon l'une des revendications 1 à 7, caractérisée en ce que l'inclinaison des spires est supérieure à celle qui est déterminée par la largeur du fil métallique.

9. Barrette de cardage selon la revendication 1, caractérisée en ce que chaque enroulement est constitué d'au moins un fil métallique à dents de scie et d'un fil métallique non dentelé.

Fig.1

Fig.2

Fig.3

Fig.4

Fig.5

Fig.6

Fig.7